Europäisches Patentamt

European Patent Office

Office européen des brevets

(11) Veröffentlichungsnummer: **0 078 473**
**B1**

(12) # EUROPÄISCHE PATENTSCHRIFT

(45) Veröffentlichungstag der Patentschrift:
06.08.86

(51) Int. Cl.⁴: **G 02 F 1/17**

(21) Anmeldenummer: **82109811.8**

(22) Anmeldetag: **23.10.82**

(54) **Stufenweise Ladungssteuerung für elektrochrome Schichten.**

(30) Priorität: **29.10.81 DE 3142906**

(43) Veröffentlichungstag der Anmeldung:
**11.05.83 Patentblatt 83/19**

(45) Bekanntmachung des Hinweises auf die Patenterteilung:
**06.08.86 Patentblatt 86/32**

(84) Benannte Vertragsstaaten:
**AT CH DE FR GB LI**

(56) Entgegenhaltungen:
**DE - A - 2 723 412**
**FR - A - 2 279 184**
**FR - A - 2 328 979**
**FR - A - 2 399 680**
**FR - A - 2 432 194**
**GB - A - 2 015 798**
**US - A - 3 807 832**

**Kmetz u. von Willisen: "Nonemissive Electrooptic Displays" Plenum Press, New York and London, 1976 S. 155-171**

(73) Patentinhaber: **Firma Carl Zeiss, D-7920 Heidenheim (Brenz) (DE)**

(72) Erfinder: **Ballmer, Horst, Dipl.-Ing., Händelstrasse 25, D-7920 Heidenheim (Brenz) (DE)**

ACTORUM AG

**Beschreibung**

Die Erfindung betrifft ein Verfahren und eine Vorrichtung zur Steuerung des Absorptionsgrades einer elektrochromen Schicht, bei der im entfärbten Zustand eine weitere Ladungsabfuhr nicht mehr möglich ist.

Elektrochrome Schichten werden beim Anlegen einer Spannung, bzw. bei Zufuhr von Ladungen, dunkel, d.h. ihr Absorptionsgrad nimmt zu. Beim Abzug von Ladungen werden die Schichten wieder transparent.

Die Ausnutzung dieser Erscheinung ist bekannt für Anzeigeelemente, wobei nur der transparente und der gefärbte Zustand verwendet werden. Dabei wird beim Färben eine definierte Zeit ein definierter Strom zugeführt. Eine zu grosse Zufuhr von Ladungen muss vermieden werden, weil sonst die Schicht zerstört wird. Dagegen ist der Entfärbevorgang unkritisch, weil nicht mehr Ladungen aus der Schicht entnommen werden können, als in ihr vorhanden sind und die völlig ladungsfreie Schicht auch die Schicht mit dem geringsten Absorptionsgrad ist. Ein wesentlicher Vorteil der elektrochromen Schichten besteht darin, dass sie nur während der Änderung ihres Absorptionsgrades Strom verbrauchen.

Aus der DE-A-27 23 412 ist eine Steuerschaltung für eine Anzeigeeinrichtung bekannt, bei der die einzelnen Segmente mit Konstantstromquellen verbunden sind. Dadurch wird eine Temperaturabhängigkeit des Absorptionsgrades vermieden und damit die Lesbarkeit verbessert.

Für Anzeigeelemente sind zwei Zustände der elektrochromen Schicht ausreichend. Für andere Anwendungszwecke, wie z.B. Sonnenschutzbrillen, abblendbare Spiegel und optische Filter sind jedoch Zwischenwerte vorteilhaft oder notwendig. Aus der FR-A-2 328 979 bzw. aus der DE-A-26 44 528 ist eine Linse mit elektrochromer Schicht bekannt, welche durch zeitweises Anlegen einer Gleichspannung der einen oder anderen Polarität mehr oder weniger stark gefärbt oder entfärbt wird. Nachteilig bei dieser bekannten Spannungsversorgung ist jedoch, dass die Schicht zu stark gefärbt und damit zerstört werden kann. Ausserdem lassen sich keine definierten Zwischenwerte einstellen. Würde man für das Hin- und Herfahren zwischen verschiedenen Zwischenwerten gleiche Lade- und Entladezeiten bei gleichem Lade- und Entladestrom, d.h. gleiche Zu- und Abfuhr von Ladungen verwenden, dann würde die Schicht immer heller, da für das Färben mehr Ladung benötigt wird, als man für das Entfärben Ladung entnehmen kann. Das gilt jedenfalls für in neuerer Zeit verfügbare Arten von elektrochromen Schichten, bei denen Wolframoxid verwendet wird. Bei anderen Arten von elektrochromen Schichten können die Verhältnisse gerade umgekehrt liegen, so dass die Schicht immer dunkler wird.

Der vorliegenden Erfindung liegt daher die Aufgabe zugrunde, ein Verfahren und eine Anordnung für elektrochrome Schichten anzugeben, welche es ermöglicht, auch Zwischenwerte des Absorptionsgrades einzustellen, wobei auch bei mehrmaligem Wechsel zwischen Zwischenwerten eine ausreichende Reproduzierbarkeit erreicht wird und eine Zerstörung der Schicht durch zu grosse Ladungszufuhr mit Sicherheit vermieden wird.

Die gestellte Aufgabe wird gemäss der Erfindung dadurch gelöst, dass der elektrochromen Schicht zur Erreichung mehrerer fester Werte für den Absorptionsgrad einmal festgelegte Ladungsmengen in beliebiger Folge zu- bzw. abgeführt werden, dass die der elektrochromen Schicht während der Färbe- bzw. Entfärbevorgänge zu – bzw. abgeführten Ladungsmengen jeweils gemessen werden, um eine Information über den jeweiligen Ladungszustand der Schicht zu erhalten, dass der Färbe- bzw. Entfärbevorgang von jedem festen Wert zu jedem festen Wert gestartet werden kann und beim gewählten Wert automatisch gestoppt wird, und dass beim Entfärben die abgeführten Ladungsmengen bei der Messung mit einem etwas geringeren Faktor berücksichtigt werden als es der festgelegten, tatsächlichen Entfärbung entspricht.

Eine zweckmässige Ausgestaltung der Erfindung zeichnet sich dadurch aus, dass der Färbe- und Entfärbevorgang von einem Komparator gestartet und gestoppt wird, welcher einen Vorgabewert mit dem Wert eines Auf/ab-Zählers vergleicht, und dass während eines Färbe- oder Entfärbevorganges der elektrochromen Schicht von zwei Konstantstromquellen Ladungen zu- bzw. abgeführt werden und von einem Taktgenerator Zählimpulse an den Auf/ab-Zähler gegeben werden, so dass der Zählerstand den Färbezustand der Schicht kennzeichnet.

Eine vorteilhafte Ausführungsform zeichnet sich dadurch aus, dass die elektrochrome Schicht mit zwei Konstantstromquellen verbunden ist, über welche Ladungen zu- oder abgeführt werden, dass die Schalteingänge der Konstantstromquellen mit einem Komparator verbunden sind, welcher mit einem Schaltungsteil zur Vorgabe eines Sollwertes und mit einem Auf/ab-Zähler verbunden ist, dass der Auf/ab-Zähler mit einem Taktgenerator verbunden ist, und dass, wenn die am Komparator anliegenden Signale ungleich sind, der Schicht über die Konstantstromquellen Ladungen zu- bzw. abgeführt werden und von dem Taktgenerator Zählimpulse an den Auf/ab-Zähler gehen, wobei die Frequenz des Taktgenerators beim Entfärbevorgang grösser ist als beim Färbevorgang. Dabei wird jedoch die Taktfrequenz für das Entfärben etwas zu niedrig eingestellt, so dass die Schicht immer etwas mehr entfärbt als gefärbt wird. Dadurch wird vermieden, dass selbst bei häufigem Wechsel der Zwischenstufen, die Schicht zu viel Ladung erhalten könnte und damit zerstört würde. Das ein wenig zu starke Entfärben der Schicht wird bei jeder Einstellung auf den völlig entfärbten Zustand ausgeglichen, da der Schicht nicht mehr als alle Ladungen entzogen werden können.

In einer anderen Ausführungsform werden bei gleicher Taktfrequenz Lade- und Entladestrom der Konstantstromquellen derart unterschiedlich eingestellt, dass die ungleiche Ladungsmenge für Färben und Entfärben fast ausgeglichen wird. In diesem Fall wird der Entladestrom ein klein wenig zu gross eingestellt, um bei häufigem Wechsel der Zwischenstufen eine Zerstörung der Schicht durch eine zu grosse Ladungsmenge mit Sicherheit zu vermeiden.

In beiden Fällen sind in einer vorteilhaften Ausgestaltung der Erfindung für die Konstantstromquellen Transistoren vorgesehen, die über Basiswiderstände in Emitterschaltung angesteuert werden.

Die maximal mögliche Ladungsmenge zum Färben der Schicht ist bei allen Ausführungsformen durch die maximal mögliche Binärkombination des Vorgabewertes begrenzt, während die Zwischenstufen des Absorptionsgrades durch die möglichen Binärkombinationen repräsentiert sind.

In einer bevorzugten Ausführungsform sind zur Einstellung der verschiedenen Vorgabewerte Drucktasten vorgesehen, bei deren Betätigung in einer Codier- und Speichereinrichtung der entsprechende Vorgabewert binär gespeichert wird. Besonders vorteilhaft ist eine Ausführungsform mit automatischer Regelung durch eine helligkeitsgesteuerte Vorgabewerterzeugung. Dabei wird das Signal einer vor der elektrochromen Schicht angeordneten Fotodiode entweder durch eine Komparatorkette oder durch mehrere als Differenzspannungskompensatoren mit Hysterese beschaltete Operationsverstärker und logische Verknüfungen in dieselben Binärsignale umgesetzt wie bei der Eingabe der Vorgabewerte über Drucktasten.

Eine weitere vorteilhafte Ausgestaltung der Erfindung besteht in der Verwendung mehrerer Taktfrequenzen oder Ladeströme für den Färbevorgang. Zur Erhöhung der Reproduzierbarkeit der Zwischenstufen trägt ferner eine Erweiterung bei, durch die ein neuer Färbe- oder Entfärbevorgang nur ausgelöst werden kann, wenn das System in Ruhe ist oder wenn, während eines noch laufenden Färbe- oder Entfärbevorganges, ein definierter Zustand vorliegt.

Die Erfindung wird im folgenden anhand der Figuren 1 bis 4 näher erläutert. Dabei zeigen:

Fig. 1 ein Prinzipschaltbild der Anordnung mit Drucktasten für die Eingabe der Vorgabewerte;

Fig. 2 ein Prinzipschaltbild für die Erzeugung der Vorgabewerte durch einen optischen Sensor;

Fig. 3 ein Prinzipschaltbild für eine hysteresebehaftete Umwandlung des Signales vom optischen Sensor in Digitalsignale und

Fig. 4 ein Prinzipschaltbild für die Erzeugung von mehreren Taktfrequenzen für den Färbevorgang.

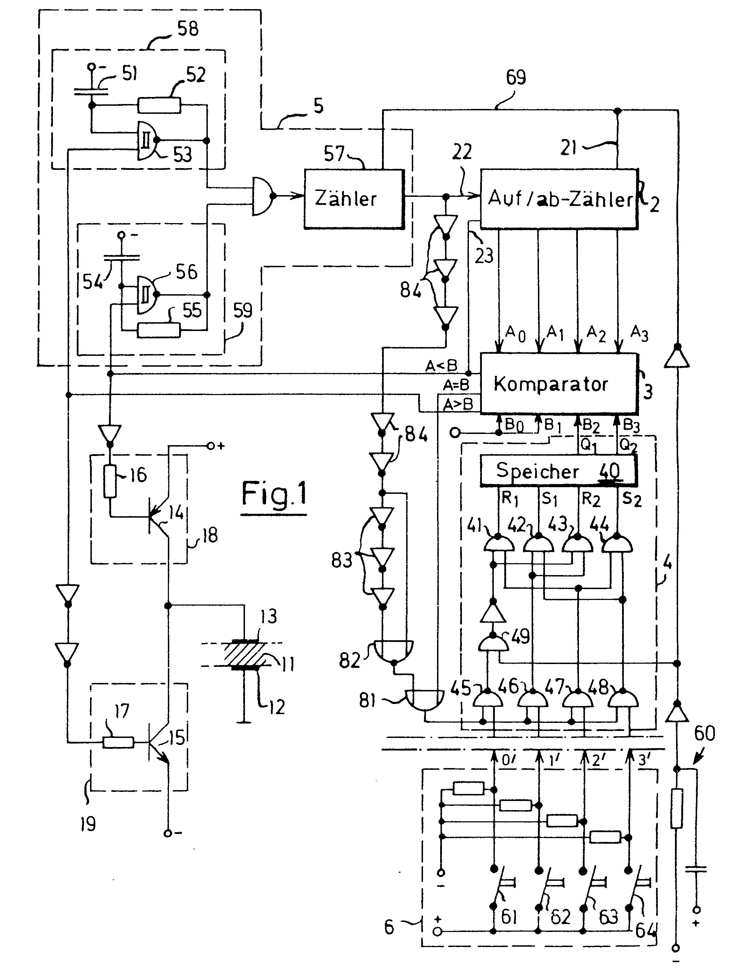

In Fig. 1 ist mit 11 die elektrochrome Schicht bezeichnet, deren eine Elektrode 12 auf Nullpotential liegt und deren andere Elektrode 13 mit den Konstantstromquellen 18 und 19 verbunden ist. Die Konstantstromquellen 18 und 19 bestehen aus dem PNP-Transistor 14 und dem NPN-Transistor 15, deren Emitter mit einer positiven und einer negativen Spannungsquelle verbunden sind und deren gemeinsamer Verbindungspunkt mit der elektrochromen Schicht verbunden ist. Die Transistoren 14 und 15 werden über die Basiswiderstände 16 und 17 angesteuert, deren Grösse über die Stromverstärkung der Transistoren alleine den Lade- bzw. Entladestrom für die Schicht bestimmt und begrenzt. Während des Färbens wird der PNP-Transistor 14 durchgesteuert; beim Entfärben der NPN-Transistor 15.

Lade- und Entladestrom für die elektrochrome Schicht werden ein- und ausgeschaltet von dem Komparator 3. Dieser vergleicht digital einen im Schaltungsteil 4 gespeicherten Vorgabewert, der am B-Eingang anliegt, mit dem im Auf/ab-Zähler 2 vorliegenden Wert, der am A-Eingang anliegt. Im gezeichneten Ausführungsbeispiel liegen die Eingänge $B_0$ und $B_1$ fest auf 0; in diesem Fall ist der Vorgabewert auf vier Binärkombinationen beschränkt. Der vom Auf/ab-Zähler angelieferte Binärwert ist jedoch im Ausführungsbeispiel vierstellig; der Zustand $A = B$ also nur vorliegen, wenn die beiden niederwertigen Stellen des Auf/ab-Zählers 2 den Wert 0 haben.

Der Komparator 3 ist über Steuerleitungen auch mit dem Taktgenerator 5 verbunden, in dem die der Ladungssteuerung zugrunde liegenden Taktsignale erzeugt werden. Der Taktgenerator enthält zwei Generatoren 58 und 59 deren unterschiedliche Frequenz durch die Kondensatoren 51 und 54, die Widerstände 52 und 55 und die Schmitt-Trigger-NAND-Gatter 53 und 56 bestimmt sind, und die in Abhängigkeit von der Färberrichtung angesteuert werden. Beim Färben wird der Takt mit der niedrigeren Frequenz eingeschaltet, beim Entfärben der mit der höheren Frequenz. Der Zähler 57 teilt die Taktfrequenz lediglich herunter.

Wenn der Komparator 3 feststellt, dass der im Schaltungsteil 4 vorliegende Vorgabewert grösser ist als der augenblickliche Zählerstand im Auf/ab-Zähler 2, dann wird der Ausgang 'A < B' aktiviert; dadurch wird die Endstufe auf Färben geschaltet, der Generator 59 mit der niedrigeren Frequenz wird eingeschaltet und der Auf/ab-Zähler 2 wird über den Eingang 23 in Aufwärtsrichtung geschaltet. Ist der Vorgabewert kleiner als der augenblickliche Zählerstand, dann wird der Ausgang 'A > B' aktiviert; dadurch wird die Endstufe auf Entfärben geschaltet und der Generator 58 mit der höheren Frequenz wird eingeschaltet. Bei inaktiven Ausgang 'A < B' ist der Zähler immer in Abwärtsrichtung geschaltet. Wenn der Vorgabewert gleich dem Zählerstand ist, werden beide Ausgänge des Komparators 'A < B' und A' > B' inaktiv und sperren somit die Endstufe und den Zeitgeber; die elektrochrome Schicht wird nicht verändert und der Auf/ab-Zähler 2 bleibt stehen.

Der Schaltungsteil 4 ist eine Codier- und Speichereinrichtung für den Vorgabewert, in der die Signale aus dem Schaltungsteil 6 oder 7 in geeigneter Weise verschlüsselt und gespeichert werden. Seine Wirkungsweise wird zusammen mit dem Schaltungsteil 6 beschrieben. Dieses enthält – in dem gezeichneten Ausführungsbeispiel – vier Drucktasten 61 bis 64 zum Einstellen von vier verschiedenen Zuständen der elektrochromen Schicht. Der Schalter 61 schaltet den vollständig entfärbten Zustand ein, der Schalter 64 den vollständig gefärbten Zustand. Wird beispielsweise der Schalter 63 gedrückt, dann liegt über die aus den vier NAND-Gattern 41 bis 44 aufgebaute Codiereinrichtung am Eingang $R_1$ des Speicherflipflops 40 ein H-Signal und am Eingang $S_2$ ein H-Signal. Dadurch nimmt der Ausgang des Flipflops die Bit-Kombination $Q_1 = L$ und $Q_2 = H$ an. Diesen Ausgangszustand hält das Flipflop so lange, bis eine andere Taste gedrückt wird.

Wegen der Speicherung des Vorgabewertes genügt es, die Tasten 61 bis 64 kurz anzutippen, um den gewünschten Zustand einzugeben. Der gewünschte Färbezustand stellt sich dann unabhängig von der Dauer der Tastenbedienung ein.

Beim Einschalten der Anordnung muss für einen definierten Ausgangszustand gesorgt werden. Dafür ist der völlig entfärbte Zustand am günstigsten. Beim Einschalten der Betriebsspannung wird über das RC-Glied 60 die Schaltsituation des Tasters 61 über das NAND-Gatter 49 simuliert und gleichzeitig der Auf/ab-Zähler 2 über den Setzeingang 21 auf die höchstmögliche Binärkombination gesetzt. Dadurch wird über den Komparator 3 der Entfärbevorgang so lange ausgelöst, dass auch eine vollständige gefärbte Schicht mit Sicherheit vollständig entfärbt wird. Ausserdem wird beim Einschalten der Untersetzer 57 über die Leitung 69 auf Null gesetzt.

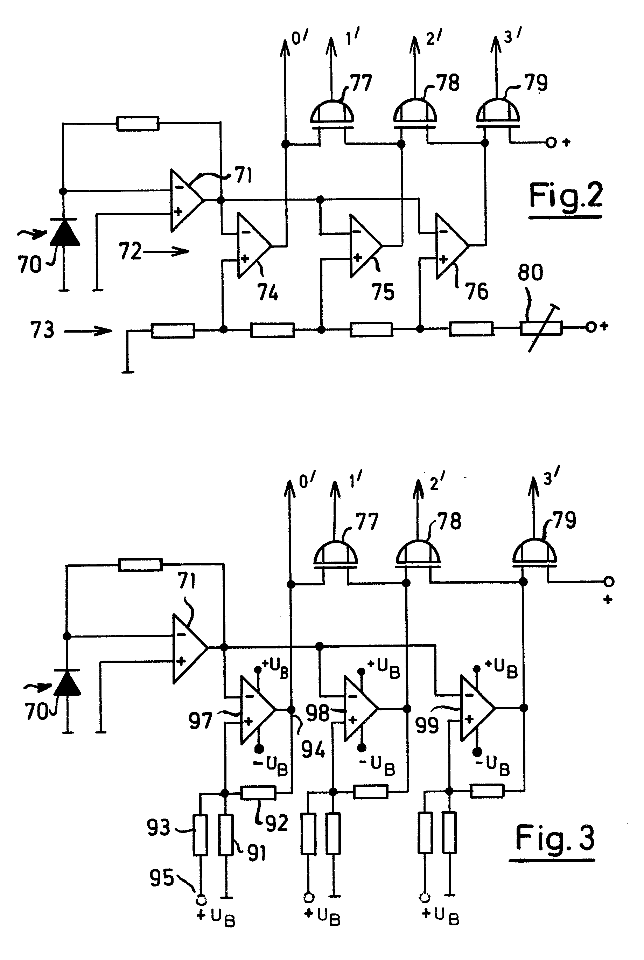

In einer vorteilhaften Ausführungsform wird an Stelle des Schaltungsteiles 6 mit Drucktastensteuerung die in Fig. 2 dargestellte Schaltung zur Erzeugung der Vorgabewerte durch einen optischen Sensor an den Schaltungsteil 4 in Fig. 1 angekoppelt. Bei dieser helligkeitsgesteuerten Vorgabewerterzeugung wird der Kurzschlussstrom der Fotodiode 70, der einen streng linearen Zusammenhang mit der Beleuchtungsstärke hat, von dem Operationsverstärker 71 verstärkt und auf die Komparatorkette 72 gegeben, der nicht invertierende Eingänge an dem Widerstandsnetzwerk 73 liegen. Je nach Beleuchtungsstärke sind ein oder mehrere Ausgänge der Komparatoren 74 bis 76 im "L"-Zustand. Die anschliessenden Exklusiv-OR-Gatter 77 bis 79 wandeln das gewonnene Digitalsignal in eine für den Schaltungsteil 4 (Fig. 1) verwertbare Form um, und zwar in der Weise, dass jeweils eine aktive Signalleitung durch ihren "H"-Zustand einen bestimmten Beleuchtungsgrad repräsentiert. Die Ausgänge des in Fig. 2 dargestellten Schaltungsteiles wirken also in der gleichen Weise wie die Drucktasten 61 bis 64 in Fig. 1. Über das Potentiometer 80 lassen sich die Komparatorschwellen verschieben und damit die Absorptionsstufen auf verschiedene Niveaus legen.

Die beschriebene A/D-Umsetzung durch eine Komparatorkette hat den Vorteil, dass die bei den sonst üblichen A/D-Wandlern starke Batteriebelastung durch den ständigen Konvertierungstakt vermieden wird.

In Fig. 3 ist eine besonders vorteilhafte Weiterentwicklung der mit Fig. 2 beschriebenen Anordnung dargestellt. Letztere kann nämlich noch folgende Nachteile zeigen: Wenn das vom Empfänger 70 kommende und vom Verstärker 71 verstärkte Signal gerade den Wert einer Schaltstufe hat, dann genügen geringe Schwankungen, um laufend Steuervorgänge auszulösen. Dies wird bei der in Fig. 3 dargestellten Anordnung verhindert, indem die Komparatoren des A/D-Umsetzers mit Schalthysteresen ausgeführt sind. Dazu wird auf einen gemeinsamen Spannungsteiler verzichtet und jeder Komparator mit einem eigenen Spannungsteiler versehen. Für den Operationsverstärker 97 sind dies die Widerstände 91 bis 93. Mit dem Widerstand 92 wird die momentane Ausgangsspannung des Operationsverstärkers 97 auf den Spannungsteiler aus den Widerständen 91 und 93 zurückgekoppelt und damit deren Teilerverhältnis beeinflusst. Ist die am Schaltungspunkt 94 liegende Ausgangsspannung $U_A$ gleich der am Schaltungspunkt 95 liegenden Spannung $U_B$, hat also das verstärkte Empfängersignal die Schaltstufe noch nicht erreicht, so hebt der Widerstand 92 das Teilerverhältnis an und setzt die Schaltschwelle höher. Ist $U_A = -U_B$, also das verstärkte Empfängersignal höher als die Schaltstufe, dann senkt der Widerstand 92 das Teilerverhältnis und setzt die Schaltschwelle niedriger. Dabei ist die Höhe der Schaltschwelle U gegeben durch

$$U = \frac{R_{91}R_{92}}{R_{91}R_{92} + R_{93}(R_{91} + R_{93})} U_B$$

und die Breite der Hystere $\pm \Delta U$

$$\pm \Delta U = \pm \frac{R_{91}R_{93}}{R_{91}R_{93} + R_{92}(R_{91} + R_{93})} U_B$$

Diese Gleichungen gelten für symmetrische Betriebsspannungen an den Operationsverstärkern 97 bis 99. Es ist möglich, diese Betriebsspannungen unsymmetrisch zu wählen; dann müssen die Gleichungen entsprechend abgeändert werden.

Die weiteren Schaltstufen sind mit den Operationsverstärkern 98 und 99 entsprechend aufgebaut. die Exklusiv-NOR-Gatter 77–79 wandeln das gewonnene Digitalsignal – ebenso wie bei der Anordnung nach Figur 2 – in die für den Schaltungsteil 4 in Fig. 1 geeignete Form um. Die Widerstände für die Spannungsteiler (z.B. 91 und 92) lassen sich auch einstellbar ausführen, wobei in diesem Fall jede Schaltstufe unabhängig von den anderen eingestellt werden kann.

In der bisher beschriebenen Ausführung kann ein neuer Färbe- oder Entfärbevorgang auch dann initiiert werden, wenn der vorhergehende noch nicht abgeschlossen ist. Da der Auf/ab-Zähler 2 den Färbe- und Entfärbevorgang nicht stetig erfasst, sondern in Stufen, würde in einem derartigen Fall eine Zuordnungsungenauigkeit entstehen. Diese lässt sich dadurch vermeiden, dass ein neuer Färbe- oder Entfärbevorgang nur eingeleitet werden kann, wenn am Komparator 3 der Fig. 1 der Ausgang $A = B$ aktiviert ist oder wenn der Auf/ab-Zähler 2 gerade auf einen neuen Wert gesprungen ist. Hierfür ist in Fig. 1 vor der Codierschaltung eine Reihe von NAND-Gattern 45–48 angeordnet, die über ein ODER-Gatter 81 mit dem Ausgang A = B des Komparators 3 und mit dem Ausgang des Taktgenerators 5 verbunden ist. In der Verbindung zum Taktgenerator 5 sind ein NOR-Gatter 82 und eine ungerade Zahl von Invertern 83 zum Differenzieren der negativen Flanke und eine ungerade Zahl von Invertern 84 zum Invertieren und Verzögern des Ausgangssignales des Taktgenerators 5 angeordnet. Die Verzögerung ist notwendig, damit die Freigabe für einen neuen Vorgabewert erst erfolgt, wenn am Ausgang des Auf/ab-Zählers 2 der neue Wert tatsächlich vorliegt. Natürlich können die Schaltpunkte auch aus einem der Ausgänge bzw. einer logischen Verknüfung mehrerer Ausgänge des Auf/ab-Zählers 2 abgeleitet werden, was inbesondere dann voteilhaft ist, wenn nicht bei jeder Binärkombinationsänderung ein neuer Vorgabewert zugelassen werden soll.

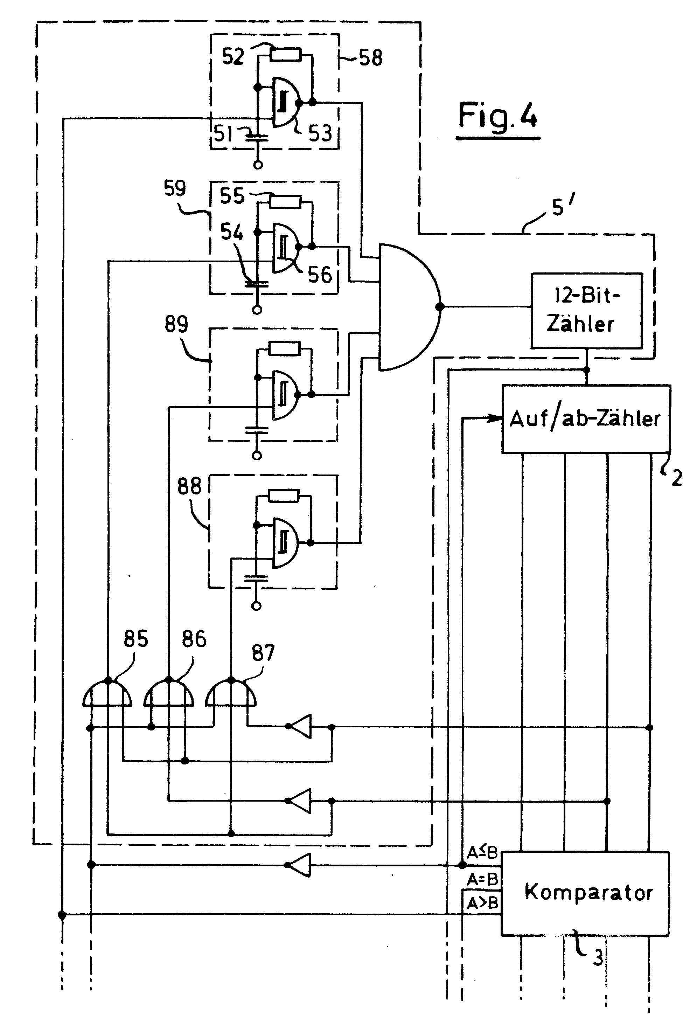

Fig. 4 zeigt eine weitere vorteilhafte Ausgestaltung der Erfindung, bei welcher gegenüber der in Fig. 1 gezeigten Anordnung beim Taktgenerator 5 für den Färbevorgang drei Generatoren mit unterschiedlichen Taktfrequenzen vorgesehen sind. Damit wird dem Umstand Rechnung getragen, dass bei elektrochromen Schichten beim Färbevorgang die Änderung des Absorptionsgrades nicht proportional zur zugeführten Ladung zunimmt, sondern mit zunehmend gefärbter Schicht geringer wird. (Dagegen besteht beim Entfärbevorgang Linearität zwischen abgeführter Ladung und Änderung des Absorptionsgrades).

Die drei verschiedenen Generatoren für den Färbevorgang sind in Fig. 4 mit 59, 88 und 89 bezeichnet; ihr Aufbau entspricht genau dem im Text zu Fig. 1 beschriebenen. Die Auswahl des beim Färbevorganges aktiven RC-Generators erfolgt über die Binärkombination der beiden höchstwertigen Ausgänge des Auf/ab-Zählers 2. Die dazu notwendige Verknüpfung der Signale erfolgt in den NOR-Gattern 85 bis 87 zusammen mit der Verknüpfung des Signales A B des Komparators 3. Wenn z.B. die Schicht vollständig entfärbt ist und der Komparator 3 einen Vorgabewert für Färben enthält, dann liegt der Ausgang A B des Komparators 3 auf "H" und damit die entsprechenden Eingänge der NOR-Gatter 85 bis 87 auf «L». Beim Auf/ab-Zähler 2 liegen die beiden höchstwertigen Ausgänge $Q_2$ und $Q_3$ auf «L». Damit liegen nur beim NOR-Gatter 85 alle Eingänge auf L und der Generator 59 wird frei gegeben. Alle anderen Generatoren bleiben inaktiv.

Mit der in Fig. 4 dargestellten Anordnung werden nicht nur gleichmässige Färbestufen erreicht, sondern auch eine bessere Reproduzierbarkeit der Stufen, da die unterschiedlich zugeführten Ladungsmengen beim Färbevorgang exakter den untereinander übereinstimmenden Stufen beim Entfärbevorgang entsprechen.

Das beschriebene Verfahren und die beschriebene Anordnung lassen sich besonders vorteilhaft z.B. bei Sonnenschutzbrillen anwenden. Die bekannten Sonnenschutzbrillen mit veränderlichem Absorptionsgrad durch die Verwendung von phototropen Gläsern haben den Nachteil, dass die Änderung des Absorptionsgrades zu langsam erfolgt und dass sie hinter den Windschutzscheiben von Autos ungenügend funktionieren. Diese Nachteile haben elektrochrome Schichten nicht. Mit der beschriebenen Schaltungsanordnung lassen sich bei einer Sonnenschutzbrille mit elektrochromer Schicht entweder vier verschiedene Absorptionsgrade von Hand über Drucktasten oder automatisch über eine Helligkeitssteuerung einstellen. Selbstverständlich ist auch eine grössere oder kleinere Zahl von Absorptionsgraden möglich. Vorteilhaft ist es auch, die Drucktasten als sogenannte Berührungssensoren auszubilden. Besonders vorteilhaft sind die beschriebenen Anordnungen bei Brillen mit optischer Wirkung, die dadurch als normale Brillen und als Sonnenbrillen verwendet werden können. Es ist ferner möglich, die Brillenlinsen durch unterschiedliche Kontaktierung im oberen Bereich stärker zu färben als im unteren Bereich und damit die Wirkung der sogenannten Autofahrersonnenbrille zu erreichen, bei denen das Armaturenbrett durch den weniger gefärbten Teil beobachtet wird.

Ein weiteres Anwendungsgebiet sind optische Geräte, bei denen zeitweise ein Strahlengang geschwächt werden soll. So besteht z.B. bei Mikroskopen der Wunsch, dass das Bild unabhängig von der eingestellten Vergrösserung immer annähernd die gleiche Helligkeit hat. Hierfür wird an eine geeignete Stelle des Mikroskopstrahlengangs eine planparallele Glasplatte mit einer elektrochromen Schicht gebracht und deren Absorptionsgrad mit einer der beschriebenen Anordnung verändert. So können z.B. die Tasten 61 bis 64 direkt durch den Vergrösserungswechsler oder durch den Objektivrevolver betätigt werden. Bei Mikroskopen mit einer Zoom-Vergrösserungseinrichtung ist die mit den Fig. 2 und 3 beschriebene automatische Regelung mit einem optischen Sensor besonders vorteilhaft. In allen Fällen kann die elektrochrome Schicht auch auf ein schon vorhandenes optisches Teil aufgebracht werden.

Als weiteres Anwendungsgebiet kommen auch optische Anordnungen in Betracht, bei denen sich ein gefordertes unterschiedliches Reklexionsvermögen durch ein unterschiedliches Absorptionsvermögen ersetzen lässt. Ein Beispiel sind abblendbare Autorückspiegel. Die bekannte Ausführung besteht aus einer Glasplatte und einem hinter ihr angeordneten Spiegel, der im Falle eines zu starken Lichteinfalles weggeklappt wird. Diese Lösung hat jedoch Nachteile: Der Spiegel muss von Hand weggeklappt werden, was nur bei Innenspiegeln mit geringem mechanischen Aufwand möglich ist. Eine Automatisierung ist nur mit verhältnismässig grossem Aufwand möglich. Ein unterschiedliches Reflexionsvermögen lässt sich auch durch eine (feststehende) rückseitig verspiegelte Glasplatte erreichen, auf deren Vorderseite eine elektrochrome Schicht aufgebracht ist. Mit der mit Fig. 1 beschriebenen Anordnung können unterschiedliche Abblendwirkungen durch die Betätigung von Tasten erreicht werden, was insbesondere bei Aussenspiegeln einen Vorteil bietet; aber auch generell den Vorteil hat, dass die Tasten völlig unabhängig vom Spiegel plaziert werden können. Mit den mit Fig. 2 und 3 beschriebenen Erweiterungen wird das Ab- bzw. Aufblenden automatisch durchgeführt, so dass der Fahrer von allen Bedienungsvorgängen entlastet wird.

**Patentansprüche**

1. Verfahren zur Steuerung des Absorptionsgrades einer elektrochromen Schicht, bei der im entfärbten Zustand eine weitere Ladungsabfuhr nicht mehr möglich ist, dadurch gekennzeichnet, dass der elektrochromen Schicht zur Erreichung mehrer fester Werte für den Absorptionsgrad einmal festgelegte Ladungsmengen in beliebiger Folge zu- bzw. abgeführt werden, dass die der elektrochromen Schicht während der Färbe- bzw. Entfärbevorgänge zu – bzw. abgeführten Ladungsmengen jeweils gemessen werden, um eine Information über den jeweiligen Ladungszustand der Schicht zu erhalten, dass der Färbe- bzw. Entfärbevorgang von jedem festen Wert zu jedem festen Wert gestartet werden kann und beim gewählten Wert automatisch gestoppt wird, und dass beim Entfärben die abgeführten Ladungsmengen bei der Messung mit einem etwas geringeren Faktor berücksichtigt werden als es der festgelegten, tatsächlichen Entfärbung entspricht.

2. Verfahren nach Anspruch 1, dadurch gekennzeichnet, dass der Färbe- und Entfärbevorgang von einem Komparator (3) gestartet und gestoppt wird, welcher einen Vorgabewert mit dem Wert eines Auf/ab-Zählers (2) vergleicht, und dass während eines Färbe- oder Entfärbevorganges der elektrochromen Schicht von zwei Konstantstromquellen (18, 19) Ladungen zu- bzw. abgeführt werden und von einem Taktgenerator (5) Zählimpulse an den Auf/ab-Zähler (2) gegeben werden, so dass der Zählerstand den Färbezustand der Schicht kennzeichnet.

3. Anordnung zur Durchführung des Verfahrens nach Anspruch 2, dadurch gekennzeichnet, dass die elektrochrome Schicht mit zwei Konstantstromquellen (18, 19) verbunden ist, über welche Ladungen zu- bzw. abgeführt werden, dass die Schalteingänge der Konstantstromquellen (18, 19) mit einem Komparator (3) verbunden sind, welcher mit einem Schaltungsteil (4) zur Vorgabe eines Sollwertes und mit einem Auf/ab-Zähler (2) verbunden ist, dass der Auf/ab-Zähler (2) mit einem Taktgenerator (5) verbunden ist, und dass, wenn die am Komparator (3) anliegenden Signale ungleich sind, der Schicht über die Konstantstromquellen (18, 19) Ladungen zu- bzw. abgeführt werden und von dem Taktgenerator (5) Zählimpulse an den Auf/ab-Zähler (2) gehen, wobei die Frequenz des Taktgenerators (5) beim Entfärbevorgang grösser ist als beim Färbevorgang, aber kleiner als es dem unterschiedlichen Ladungsbedarf bei Färben und Entfärben entspricht.

4. Anordnung zur Durchführung des Verfahrens nach Anspruch 2, dadurch gekennzeichnet, dass die elektrochrome Schicht mit zwei Konstantstromquellen (18, 19) verbunden ist, über welche Landungen zu- bzw. abgeführt werden, dass die Schalteingänge der Konstantstromquellen (18, 19) mit einem Komparator (3) verbunden sind, welcher mit einem Schaltungsteil (4) zur Vorgabe eines Sollwertes und mit einem Auf/ab-Zähler (2) verbunden ist, dass der Auf/ab-Zähler (2) mit einem· Taktgenerator (5) verbunden ist, und dass, wenn die am Komparator (3) anliegenden Signale ungleich sind, der Schicht über die Konstantstromquellen (18, 19) Ladungen zu- oder abgeführt werden und von dem Taktgenerator (5) Zählimpulse an den Auf/ab-Zähler (2) gehen, wobei der Entfärbestrom kleiner ist als der Färbestrom, aber grösser als es dem unterschiedlichen Ladungsbedarf bei Färben und Entfärben entspricht.

5. Anordnung nach Anspruch 3 oder 4, dadurch gekennzeichnet, dass der Schaltungsteil (4) zur Vorgabe des Sollwertes auf eine maximal mögliche Binärkombination begrenzt ist und Zwischenstufen des Absorptionsgrades durch die möglichen Binärkombinationen repräsentiert sind.

6. Anordnung nach einem der Ansprüche 3 bis 5, dadurch gekennzeichnet, dass zur Eingabe verschiedener Vorgabewerte mehrere Tasten (61 bis 64) und ein Speicher (40) mit einer Codiereinrichtung (41 bis 44) vorgesehen sind.

7. Anordnung nach einem der Ansprüche 3 bis 5, dadurch gekennzeichnet, dass für die Erzeugung der Vorgabewerte ein optischer Sensor (70) über einen AD-Umsetzer in Form einer Komparatorkette (72) mit der Codiereinrichtung (41 bis 44) des Speichers (40) verbunden ist.

8. Anordnung nach einem der Ansprüche 3 bis 5, dadurch gekennzeichnet, dass für die Erzeugung der Vorgabewerte ein optischer Sensor (70) über einen AD-Umsetzer aus mehreren als Differenzspannungskompensatoren mit Hysterese beschalteten Operationsverstärkern (97 bis 99) mit der Codiereinrichtung (41 bis 44) des Speichers (40) verbunden ist.

9. Anordnung nach einem der Ansprüche 4 bis 8, dadurch gekennzeichnet, dass für das Färben der Schicht mehrere Generatoren (59, 89, 88) im Taktgenerator (5′) vorgesehen sind.

10. Anordnung nach einem der Ansprüche 3 bis 9, dadurch gekennzeichnet, dass vor der Codiereinrichtung (41 bis 44) eine Reihe von NAND-Gattern (45 bis 48) angeordnet ist, welche über ein OR-Gatter (81) mit dem Ausgang A = B des Komparators (3) und über ein Flankendifferenzierglied (82, 83) entweder über logische Verknüpfungen mit dem Ausgang oder über einen Inverter und Verzögerungsglieder (84) mit dem Eingang (22) des Auf/ab-Zählers (2) verbunden sind.

11. Anordnung nach einem der Ansprüche 3 bis 10, dadurch gekennzeichnet, dass für die Konstantstromquellen (18, 19) Transistoren (14, 15) in Emitterschaltung vorgesehen sind, welche über Basiswiderstände (16, 17) mit dem Komparator (3) verbunden sind.

12. Verwendung der Anordnung nach einem der Ansprüche 3 bis 11 für Sonnenschutzbrillen, abblendbare Spiegel und optische Filter.

**Claims**

1. A method of controlling the absorptance of an electrochromic layer, by which in the decolored state a further removing of changes is not possible, characterized by the fact that for achievement of multiply fixed values of absorptance once predetermined quantities of charges are fed to resp. removed from the electrochromic layer in any sequence, that the quantities of charges which are fed to resp. removed from the eletromic layer during the coloring resp. decoloring processes are measured in order to receive informations about the particular state of charge, that the coloring and decoloring process can be started from every fixed value to every fixed value and is terminated at the selected value automatically and that at decoloring the removed charges are considered at the measurement with a slightly lower factor than it corresponds to the predetermined fixed real decolorization.

2. A method according to claim 1, characterized by the fact that the coloring and decoloring processes are started and stopped by a comparator (3) which compares a guide value with the value of a forward/backward counter (2), and that during a coloring or decoloring process charges are fed to and removed from the electrochromic layer via two sources of constant current (18, 19) and counting pulses are fed by a clock generator (5) to a forward/backward counter (2) so that the reading of the counter characterized the state of color of the layer.

3. An arrangement for carrying out the method of claim 2, characterized by the fact that the electrochromic layer is connected to two sources of constant current (18, 19) via which charges are fed and removed respectively, that the switch inputs of the sources of constant current (18, 19) are connected to a comparator (3) which is connected to a circuit part (4) for the predetermination of a desired value and with a forward/backward counter (2), that the forward/backward counter (2) is connected to a clock generator (5) and that, when the signals present on the comparator (3) are unequal, charges are fed to or removed from the layer via the sources of constant current (18, 19) and counting pulses are fed by the clock generator (5) to the forward/backward counter (2), the frequency of the clock generator (5) being greater upon the decoloring process than upon the coloring process, but smaller than it corresponds to the different requirements of charges for coloring and decoloring.

4. An arrangement for carrying out the method of claim 2, characterized by the fact that the electrochromic layer is connected to two sources of constant current (18, 19) via which charges are fed and removed respectively, that the switch inputs of the sources of constant current (18, 19) are connected to a comparator (3) which is connected to a circuit part (4) for the predetermined of a desired value and to a forward/backward counter (2), that the forward/backward counter (2) is connected to a clock generator (5), and that, when the signals present at the comparator (3) are unequal, charges are fed to or removed from the layer via the sources of constant current (18, 19) and counting pulses are fed by the clock generator (5) to the forward/backward counter (2), the decoloring current being smaller than the coloring current, but greater than it corresponds to the different requirements of charges for coloring and decoloring.

5. An arrangement according to claim 3 or 4, characterized by the fact that the circuit part (4) for the predetermination of the desired value is limited to a maximum possible binary combination and intermediate steps of the absorptance are represented by the binary combinations possible.

6. An arrangement according to any of claims 3 to 5, characterized by the fact that, for the entry of different predetermination values, a plurality of keys (61 to 64) and a storage (40) with a coding device (41 to 44) are provided.

7. An arrangement according to any of claims 3 to 5, characterized by the fact that for the generation of the predetermination values an optical sensor (70) is connected via an AD converter in the form of a comparator chain (72) to the coding device (41 to 44) of the storage (40).

8. An arrangement according to any of claims 3 to 5, characterized by the fact that for the generation of the predetermination values an optical sensor (70) is connected via an AD converter consisting of a plurality of operational amplifiers (97 to 99) wired as differential voltage compensators with hysteresis, to the coding device (41 to 44) of the storage (40).

9. An arrangement according to any of claims 4 to 8, characterized by the fact that a plurality of generators (59, 89, 88) are provided in the clock generator (5') for the coloring of the layer.

10. An arrangement according to any of claims 3 to 9, characterized by the fact that in front of the coding device (41 to 44) there are arranged a number of NAND gates (45 to 48) which are connected via an OR gate (81) to the output A = B of the comparator (3) and via flank-differentiating member (82, 83) either via logic elements to the output or via an inverter and delay elements (84) to the input (22) of the forward/backward counter (2).

11. An arrangement according to any of claims 3 to 10, characterized by the fact that transistors (14, 15) are provided in emitter circuit for the sources of constant current (18, 19), the transistors being connected to the comparator (3) via base resistors (16, 17).

12. Use of an arragement according to any of claims 3 to 11 for sunglasses, dimmable mirrors and optical filters.

**Revendications**

1. Procédé pour la commande du degré d'absorption d'une couche électrochrome, où dans la condition décolorée une autre évacuation de charges n'est plus possible, caractérisé en ce que des quantités de charges établies initialement pour obtenir dans la couche électrochrome des valeurs fixes du degré d'absorption sont introduites ou évacuées dans une séquence quelconque, en ce que les quantités de charges introduites dans ou évacuées de la couche électrochrome pendant les processus de coloration ou de décoloration sont respectivement mesurées pour obtenir une information sur la condition de charge correspondante de la couche, en ce que l'opération de coloration ou de décoloration peut être amorcée depuis toute valeur fixe jusqu'à une autre valeur fixe et peut être arrêtée automatiquement à la valeur sélectionnée et en ce que, lors d'une décoloration les quantités de charges évacuées sont prises en considération lors de la mesure avec un facteur légèrement plus faible que celui correspondant à la décoloration effective établie.

2. Procédé selon la revendication 1, caractérisé en ce que le processus de coloration et le processus de décoloration sont enclenchés et arrêtés par un comparateur (3) qui compare une valeur de référence avec la valeur fournie par un compteur progressif/régressif (2), et en ce que, pendant un processus de coloration ou de décoloration, des charges sont introduites dans la couche électrochrome et évacuées de celle-ci par deux sources de courant constant (18, 19) et des impulsions de comptage sont fournies par un générateur de cadencement (5) au compteur progressif/régressif (2) de telle sorte que le compte du compteur caractérise l'état de coloration de la couche.

3. Dispositif pour la mise en œuvre du procédé selon la revendication 2, caratérisé en ce que la couche électrochrome est reliée à deux sources de courant constant (18, 19) par l'intermédiaire desquelles des charges sont introduites dans la couche ou évacuées de celle-ci, en ce que les entrées de commande des sources de courant constant (18, 19) sont reliées à un comparateur (3) qui est relié à une partie de circuit (4) pour la détermination d'une valeur de consigne et à un compteur progressif/régressif (2), en ce que le compteur progressif/régressif (2) est relié à un générateur de cadencement (5) et en ce que, lorsque les signaux appliqués au comparateur (3) ne sont pas égaux, des charges sont introduites dans la couche ou évacuées de celle-ci par l'intermédiaire des sources de courant constant (18, 19) et des impulsions de comptage sont appliquées par le générateur de cadencement (5) au compteur progressif/régressif (2), la fréquence du générateur de cadencement (5) lors du processus de décoloration étant plus grande que lors du processus de coloration, mais étant inférieure à ce qui correspond à la différence des besoins en charge lors d'une coloration et d'une décoloration.

4. Dispositif pour la mise en œuvre du procédé selon la revendication 2, caractérisé en ce que la couche électrochrome est reliée à deux sources de courant constant (18, 19) par l'intermédiaire desquelles des charges sont introduites dans la couche ou évacuées de celle-ci, en ce que les entrées de commande des sources de courant constant (18, 19) sont reliées à un comparateur (3) qui est relié à une partie de circuit (4) pour la détermination d'une valeur de consigne et à un compteur progressif/régressif (2), en ce que le compteur progressif/régressif (2) est relié à un générateur de cadencement (5) et en ce que, lorsque les signaux appliqués au comparateur (3) ne sont pas égaux, des charges sont introduites dans la couche ou évacuées de celle-ci par l'intermédiaire de sources de courant constant (18, 19) et des impulsions de commande sont appliquées par le générateur de cadencement (4) au compteur progressif/régressif (2), le courant de décoloration étant inférieur au courant de coloration mais étant cependant supérieur à ce qui correspond à la différence des besoins en charge lors d'une coloration et d'une décoloration.

5. Dispositif selon la revendication 3 ou 4, caractérisé en ce que la partie de circuit (4) servant à la détermination de la valeur de consigne est limitée à une combinaison binaire maximale possible et des échelons intermédiaires du degré d'absorption sont représentés par les combinaisons binaires possibles.

6. Dispositif selon une des revendications 3 à 5, caractérisé en ce que, pour introduire différentes valeurs de référence, il est prévu plusieurs boutons-poussoirs (61 à 64) et une mémoire (40) pourvue d'un dispositif de codage (41 à 44).

7. Dispositif selon une des revendications 3 à 5, caractérisé en ce que, pour la génération des valeurs de référence, il est prévu un détecteur optique (70) qui est relié par l'intermédiaire d'un convertisseur analogique/numérique, se présentant sous la forme d'une chaîne de comparateurs (72), avec le dispositif de codage (41 à 44) de la mémoire (40).

8. Dispositif selon une des revendications 3 à 5, caractérisé en ce que, pour la génération des valeurs de référence, il est prévu un détecteur optique (70) relié par l'intermédiaire d'un convertisseur analogique/numérique, se composant de plusieurs amplificateurs opérationnels (97 à 99) branchés comme des compensateurs de tension différentielle avec hystérésis, avec le dispositif de codage (4 à 44) de la mémoire (40).

9. Dispositif selon une des revendications 4 à 8, caractérisé en ce que, pour la coloration de la couche, il est prévu plusieurs générateurs (59, 89, 88) dans le générateur de cadencement (5').

10. Dispositif selon une des revendications 3 à 9, caractérisé en ce qu'il est prévu avant le dispositif de codage (41 à 44) une série de portes NON ET (41 à 48) qui sont reliées par l'intermédiaire d'une porte OU 81 avec la sortie A = B du comparateur (3) et, par l'intermédiaire d'un organe de différenciation de flanc (82, 83), soit par l'intermédiaire de combinaisons logiques, avec la sortie du compteur progressif/régressif (2), soit par l'intermédiaire d'un inverseur et d'organes de retardement (84), avec l'entrée (22) dudit compteur.

11. Dispositif selon une des revendications 3 à 10, caractérisé en ce qu'il est prévu des sources de courant constant (18, 19) des transistors (14, 15) à circuit d'émetteurs et qui sont reliées au comparateur (3) par l'intermédiaire de résistances de bases (16, 17).

12. Utilisation du dispositif selon une des revendications 3 à 11 pour des lunettes de protection solaire, des miroirs anti-éblouissement et des filtres optiques.

0 078 473

Fig.1

0 078 473

Fig.2

Fig. 3

Fig.4